# EUROPEAN PATENT SPECIFICATION

(11) **EP 4 471 398 B1**
(45) Date of publication and mention of the grant of the patent: **22.10.2025**
(21) Application number: 24176937.1
(22) Date of filing: 21.05.2024
(51) Int. Cl.: G01M 9/04, G01M 17/007

(54) **WIND TUNNEL**
WINDKANAL
TUNNEL AÉRODYNAMIQUE

(30) Priority: 01.06.2023 IT 202300011217
(43) Date of publication of application: 04.12.2024
(73) Proprietor: PIAGGIO & C. S.P.A., 56025 Pontedera (PI) (IT)
(72) Inventor: DE LUCA, Marco, 56025 Pontedera (PI) (IT); SCIAMÈ, Gabriele, 56025 Pontedera (PI) (IT)
(74) Representative: Pipoli, Massimo

(56) References cited:
- WO-A1-2023/041722
- US-A- 4 978 300
- US-A1- 2002 055 422
- US-A1- 2015 279 228
- US-B1- 8 505 374
- SUZUKI GLOBAL: "FOCUSED ON QUALITY | Aerodynamic Testing | Suzuki", 8 June 2022 (2022-06-08), XP093109175, Retrieved from the Internet <URL:https://www.youtube.com/watch?v=vQsW1qwfrdY> [retrieved on 20231205]

## Description

### TECHNOLOGICAL FIELD

The present invention relates to the field of systems for testing the performance of motorcycles. In particular, the present invention relates to wind tunnels.

### BACKGROUND ART

The use of wind tunnels for testing the aerodynamic performance of vehicles has been known for some time. Generally, wind tunnels comprise at least one large fan positioned in front of and/or behind an area in which the vehicle to be tested can be arranged.

The area in which the vehicle to be tested is positioned can or cannot have rollers for rotating the wheels of the vehicle and thus testing the vehicle as if it were moving.

The use of movable platforms in the wind tunnel in order to move the vehicle even with respect to the direction of the air flow is also known in the prior art. An example of this is known from document DE102018221677A1. The online video titled "FOCUSED ON QUALITY Aerodynamic Testing | Suzuki" (URL:https://www.youtube.com/watch?v=vQsW1qwfrdY) discloses wind tunnel testing of a motorcycle using a support system connected to a rear axle of the motorcycle. The document US 2015/279228 A1 discloses a test stand for testing a motorcycle including the simulation of the effect of wind. The motorcycle is supported by a system comprising jacks to enable tilting motions.

None of the known solutions allows simulating the aerodynamic performance of a motorcycle under roll conditions in a dynamic manner, or in any case with an inclination setting which is quick, simple and affordable.

### SUMMARY

It is a first object of the present invention to solve the drawbacks of the prior art by a wind tunnel comprising: a platform on which a motorcycle can be placed; at least one fan arranged in front of and/or behind the platform so as to generate an air flow which flows longitudinally over the platform; an adjustable support configured to be connected by means of an articulated axis to a portion of the motorcycle, preferably the rear wheel axis thereof, where the adjustable support comprises:
- the articulated axis, which comprises at least two axis portions hinged to each other;
- a left actuated column and a right actuated column connected to opposite ends of the articulated axis, respectively. The system thus conceived allows simulating a vehicle tilted to one side, such as a motorcycle, for example, in a wind tunnel in a dynamic or static manner, as required, without the need to make an *ad hoc* support.

The articulated axis can comprise a left axis portion, a right axis portion, and a central axis portion, and where the central axis portion can be hinged by means of a left hinge to the left axis portion and by means of a right hinge to the right axis portion. This architecture of the articulated axis is more flexible and allows for a quicker configuration of the testing area. Moreover, this configuration allows for a greater roll angle of the motorcycle, the vertical movement of the support columns being equal.

The left and right hinges can have hinging axes substantially parallel to the platform. This arrangement of the axes makes the articulation of the axis easer if the actuated columns are vertical with respect to the platform.

The left axis portion can be slidingly coupled to the left actuated column or the right axis portion can be slidingly coupled to the right actuated column. This type of coupling allows for a dynamic adjustment of the tilting of the central axis portion.

In particular, the left actuated column can comprise a left clamping device configured to clamp the left axis portion and/or the right actuated column can comprise a right clamping device configured to clamp the right axis portion. If both portions are clamped to the related columns, the setting of the articulated axis is performed in a non-dynamic manner. When, instead, one portion is slidingly connected to a column and the other portion is clamped to the other column, a dynamic setting of the articulated axis is possible.

The central axis portion can be configured to pass in the rear wheel axis of the motorcycle. If the rear wheel axis of the motorcycle is hollow, at least one part of the central axis can be sized so as to pass inside the rear wheel axis.

Advantageously, the central axis portion can comprise connecting means to connect the rear wheel axis of the motorcycle to the central axis portion. These connecting means allow the rear wheel axis of the motorcycle to be rigidly constrained to the adjustable support.

The left and right actuated columns can be arranged vertically with respect to the platform. This is the simplest solution for actuating the rear axle supports of the motorcycle.

In particular, the left and right actuated columns can be configured to move up and down independently with respect to the platform. The independent movement of the actuated columns allows obtaining a tilting the axis.

In particular, the width of the central axis portion can be greater than or equal to half the distance between the left and right actuated columns.

Preferably, the wind tunnel can comprise at least one roller arranged below the platform and in contact the wheel(s) of the motorcycle. The contact occurs due to one or more windows provided on the platform, which allow the passage of the wheel(s) at said window(s). The wheels can thus be rotated and hence the movement of the motorcycle can be simulated under operating conditions.

These and other advantages will become more apparent from the following description of an embodiment thereof, given by way of non-limiting indication, with reference to the accompanying drawings.

### DESCRIPTION OF THE DRAWINGS

In the drawings:
Fig. 1 shows a diagrammatic view of a wind tunnel according to the present invention;
Fig. 2 shows a diagrammatic rear view of a motorcycle in rolled position when it is connected to an adjustable support of the wind tunnel according to the present invention;
Fig. 3 shows a diagrammatic side view of a motorcycle in rolled position when it is connected to an adjustable support of the wind tunnel according to the present invention;
Fig. 4 shows a diagrammatic top view of a simplified motorcycle in vertical position when it is connected to an adjustable support of the wind tunnel according to the present invention;
Fig. 5 shows a diagrammatic top view of a simplified motorcycle in rolled position when it is connected to an adjustable support of the wind tunnel according to the present invention;
Fig. 6 shows a diagrammatic rear view of a simplified motorcycle in vertical position when it is connected to an adjustable support of the wind tunnel according to the present invention;
Fig. 7 shows a diagrammatic rear view of a simplified motorcycle in rolled position when it is connected to an adjustable support of the wind tunnel according to the present invention;
Fig. 8 shows a diagrammatic rear view of a simplified motorcycle in rolled position when it is connected to a particular version of an adjustable support of the wind tunnel according to the present invention.

### DETAILED DESCRIPTION

The following description of one or more embodiments of the invention refers to the accompanying drawings. The same reference numerals in the drawings identify identical or similar elements. The subject of the invention is defined by the appended claims. The technical details, structures, or features of the solutions described below can be mutually combined in any manner.

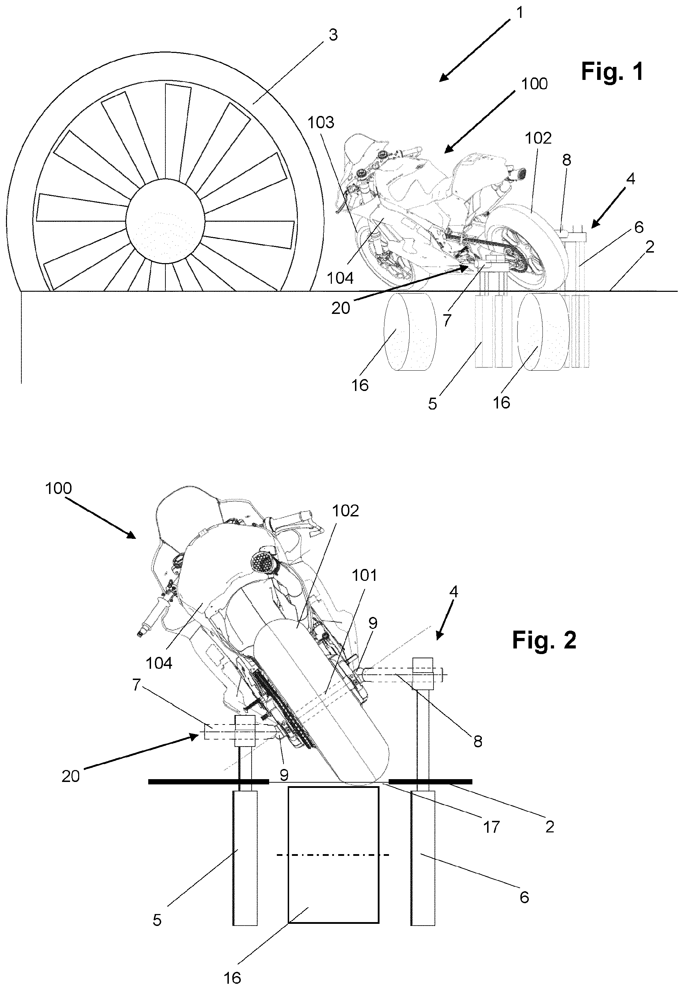

Reference numeral 1 in Fig. 1 indicates a wind tunnel which comprises a platform 2 on which a motorcycle 100 is arranged. The motorcycle 100 is in the rolled position, i.e., tilted to a side. Specifically, motorcycle 100 is tilted to the left side.

The motorcycle 100 is arranged in front of a large fan 3, i.e., a device adapted to generate an air flow capable of entirely hitting the motorcycle 100.

The wind tunnel 1 further comprises rollers 16 configured to rotate upon the actuation of an engine (not shown).

The rollers 16 are in contact with the wheels 102, 103 of motorcycle 100. In particular, the front roller 16 is in contact with the front wheel 103 of motorcycle 100 and the rear roller 16 is in contact with the rear wheel 102. Two openings 17 are present on platform 2, at said wheels 102, 103, to allow rollers 16 and wheels 102, 103 to come into contact, as better shown in Fig. 2.

The rollers 16 move the wheels 102, 103, simulating a movement of the vehicle, while fan 3 blows air towards motorcycle 100. In an embodiment (not shown), there are no rollers and therefore the wheels of motorcycle 100 are stationary. In a further embodiment (not shown), the rollers are replaced by a belt which simulates the movement of the ground under motorcycle 100. Said belt is moved by a motor and is adapted to rotate both wheels of motorcycle 100. Alternatively, the belt can be configured to move the wheels individually, as done by rollers 16.

In one version (not shown), the fans can be two in number, arranged on opposite sides with respect to platform 2. Alternatively, fan 3 can be arranged only behind platform 2.

In a known manner, the portions upstream and downstream of platform 2, and therefore behind the fan(s) 3, can be fluidly connected to each other so as to recirculate the same air several times over inside the wind tunnel 1. This configuration type of the wind tunnel 1 is referred to as a "closed circuit" configuration type. Alternatively, the air flow rate is not recovered but continuously renewed. This type of wind tunnel 1 is generally referred to as an "open circuit" type.

Platform 2 can be configured to rotate with respect to a vertical axis with respect to the platform 2 itself, so as to change the orientation of motorcycle 100 with respect to the direction of the air flow.

In order to support and tilt the motorcycle 100, the wind tunnel 1 is provided with an adjustable support 4, shown in Figs. 1-8.

The adjustable support 4 comprises a left actuated column 5 and a right actuated column 6. The term "column" comprises any type of support adapted to support a given element, specifically the articulated axis 20, at a given height from platform 2.

The term "actuated column" is indicated more briefly below by the term "column".

The articulated axis 20 comprises three portions: left portion 7, right portion 8, and central portion 9. As clarified below, the portions of the articulated axis can also be two in number.

The central portion 9 of the articulated axis 20 is connected to the rear wheel axis 101 of the motorcycle 100 so that by tilting the central portion 9 by a given degree, the rear wheel axis 101 also tilts by the same degree and accordingly the motorcycle 100 also tilts by the same degree.

The left and right columns 5, 6 are connected to portions of the articulated axis 20, respectively. Specifically, the left column 5 is connected to the left axis portion 7, while the right column 6 is coupled to the right axis portion 8.

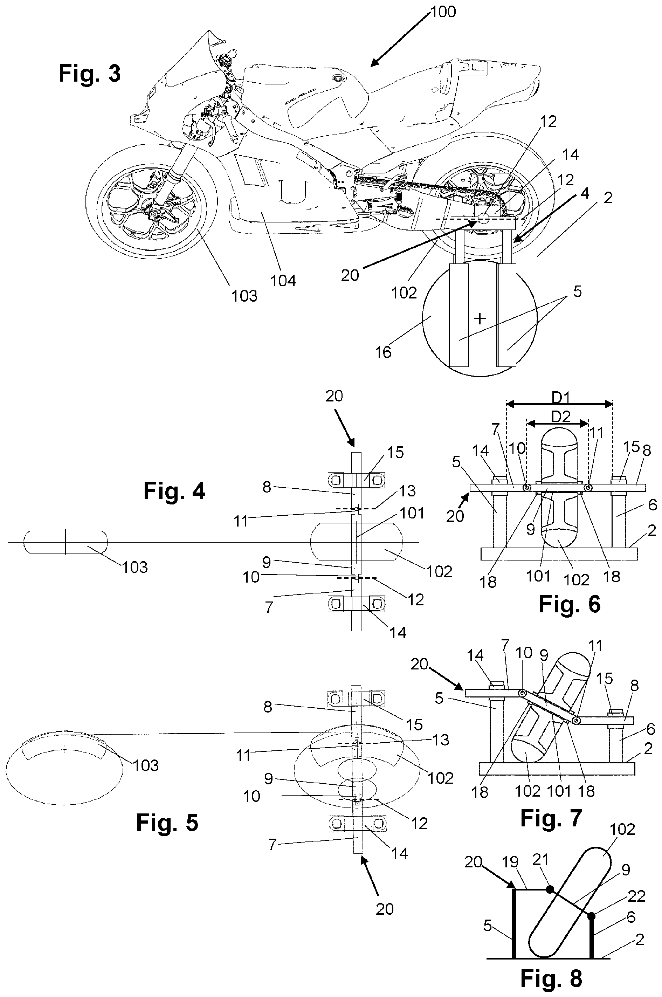

The columns 5, 6 are actuated, i.e., allow for a variation of the height with respect to platform 2 of the respective axis portions 7, 8, as better shown in Figs. 2, 7. The mechanism allowing the column 5, 6 to vary the height thereof can be of various types and therefore only some types of possible actuations are mentioned. Each column 5, 6 can be, for example, a hydraulically actuated telescopic fork or can alternatively comprise two bodies mechanically connected to each other by means of a worm screw.

The columns 5, 6 move independently with respect to platform 2.

The columns 5, 6 extend vertically with respect to platform 2. As shown in Figs. 1-3, part of the columns 5, 6 extend over the plane defined by platform 2, while another part of the columns 5, 6 extends below platform 2.

As shown in Figs. 1-7, the left axis portion 7 is rigidly connected to the left actuated column 5. Specifically, the rigid coupling is achieved by means of a clamping device 14.

The clamping device 14 comprises a clamp configured to tighten an axis portion 7. The clamps can be tightened with the aid of bolts.

An axis portion, which in Figs. 6, 7 is the right axis portion 8, can slide with respect to the respective column 6. The sliding device 15 is a hinge configured to allow for a prismatic coupling between the portion 8 of the articulated axis 20 and the column 6.

If one of the axis portions 7, 8 slides with respect to the respective column 5, 6, the other axis portion 7, 8 will be rigidly constrained to the respective column 5, 6. A dynamic adjustment of the articulated axis 20 is thus possible. It is also possible for both axis portions 7, 8 to slide with respect to the respective columns 5, 6 and to have actuators adapted to dynamically adjust, for example with a braking system, the relative sliding between the two elements.

Alternatively, both the axis portions 7, 8 are constrained to the respective columns 5, 6 by means of clamping devices 14. Here, the articulated axis 20 is first clamped on one side, with a clamping device 14, then the columns 5, 6 are vertically moved, thus adjusting the tilt angle of the central portion 9, and then the other end of the articulated axis 20 is clamped by means of a further clamping device 14.

The left axis portion 7 is hinged to the central portion 9 by means of a left hinge 10, while the right axis portion 8 is hinged to the central portion by means of a right hinge 11. The articulated axis 20 can thus take several configurations depending on the angle obtained between the left portion 7 and the central portion 9 and on the angle obtained between the right portion 8 and the central portion 9, as shown in Fig. 7.

The rotation axes 12, 13 of the respective hinges 10, 11 are substantially parallel to platform 2, as shown in Fig. 3. Therefore, by varying the distance of the axes 12, 13 from platform 2, various tilt angles of the central portion 9 are obtained. The rotation axes 12, 13 are also parallel to the longitudinal axis of the motorcycle 100.

The left 7 and right 8 portions of the articulated axis 20 are connected to the respective columns 5, 6, therefore by varying the height thereof with respect to platform 2, the portions 7, 8 move up and down while remaining parallel to the platform 2, as shown in Figs. 2, 7. Since the left 7 and right 8 portions are hinged to the central portion 9, the central portion 9 tilts when the heights of the left 7 and right 8 portions with respect to platform 2 differ, as better shown in Figs. 2, 5, 7.

The angle between the left column 5 and the left axis portion 7 is fixed and is equal to 90°, as is the angle between the right column 6 and the right axis portion 8.

When the height of the columns 5, 6 with respect to platform 2 differs, the central portion 9 tilts, as shown in Figs. 1, 2, 3, 5, 7. When the height of the columns 5, 6 with respect to platform 2 is the same, the central portion 9 is parallel to platform 2, as shown in Figs. 4, 6.

In particular, in Figs. 4, 6, motorcycle 100 is not rolled but vertical with respect to platform 2. Instead, in Figs. 5, 6, as well as in Figs. 1-3, the motorcycle 100 is in the rolled position, i.e., tilted to one side. In Figs. 4, 5, motorcycle 100 is only depicted by the radial profile of the wheels 102, 103 thereof and part of the outer surface of the related tires. The rear wheel axis 101 is also diagrammatically depicted.

The adjustment of the height of the columns 5, 6 is also a function of the diameter of the rear wheel 102, as it can be understood in Figs. 6, 7. By varying the height of the columns 5, 6, the rear wheel 102 is raised or lowered with respect to platform 2. The adjustment of the height of the columns 5, 6 thus needs to take into account the tilt of the central portion 9 but also that the rear wheel 102 must remain resting on platform 2 or roller 16, as shown in Figs. 1, 2, 3, 7.

The central portion 9 of the articulated axis 20 is fixed to the rear wheel axis 101 by means of connecting means 18, also referred to as wheel clamps 18. These wheel clamps 18 are configured to laterally harpoon the rear wheel axis 101 and constrain it to the central portion 9. For example, stops are connected to the central portion 9, and by means of a thread, can translate on the central portion 9 and act on side faces of the wheel pin 101. Thrust blocks adapted to allow for a relative rotation of the wheel clamps 18 with respect to the rear wheel assembly 102 and/or the rear fork of the motorcycle 100 can be provided on the wheel clamps 18. Optionally, ball bearings or bushings can be inserted between the rear wheel axis 101 and the central portion 9 of the articulated axis 20 to reduce the friction during the relative movements therebetween.

Preferably, the central portion 9 is sized so as to pass inside the rear wheel axis 101 when the latter is hollow, as shown in Figs. 2, 6, 7.

If the rear wheel axis 101 is not hollow (which hypothesis is not shown), the central axis 9 is divided into two parts and each part is constrained to opposite sides of motorcycle 100, respectively. The connection with the rear axis 101 is indeed preferable but not required. The lateral tilt of motorcycle 100 can also be achieved by connecting the adjustable support 4 to a different portion of the motorcycle 100. For example, the adjustable support 4 can be connected to the front portion of motorcycle 100, and in particular to the front wheel 103, frame, or side 104 thereof. In essence, the suggested mechanism can usefully tilt the motorcycle 100 even if it is connected to any part of the motorcycle adapted to transfer the tilt movement to the entire vehicle.

The central portion 9 of the articulated axis 20 has a width D2 which is less than the inner distance between the columns 5, 6, as shown in Figs. 6, 7, 8.

In an alternative embodiment shown in Fig. 8, the articulated axis 20 comprises two portions, not three. A first portion 19, either right or left, is rigidly constrained to the respective column 5 and is connected by means of a first hinge 21 to the central portion 9. The central portion 9 is then pivotally connected by means of a second hinge 22 to the other column 6. The first and second hinges 21, 22 have rotation axes parallel to platform 2. All the other features of this embodiment coincide with the previous embodiment described.

The articulated axis 20 thus conceived can be used even autonomously on existing wind tunnels, thus facilitating aerodynamic tests in which the motorcycle 100 is tilted. Known wind tunnels have a connection axis with the rear wheel 101 of the motorcycle 100 of rigid and monolithic type, and the actuated columns do not have a sufficient range to allow simulating roll angles comparable to the maximum roll angle of the motorcycle. Therefore, current wind tunnels do not allow simulating roll conditions which usually occur on the track with racing motorcycles 100, which reach roll tilts of 60°-65°.

In conclusion, it is apparent that the invention thus devised is susceptible to several modifications or variations. The matter for which protection is sought is defined by the appended claims.

### Key:

- 1: wind tunnel
- 2: platform
- 3: fan
- 4: adjustable support
- 5: left actuated column
- 6: right actuated column
- 7: left axis portion
- 8: right axis portion
- 9: central axis portion
- 10: left hinge
- 11: right hinge
- 12: left hinging axis
- 13: right hinging axis
- 14: clamping device
- 15: sliding device
- 16: roller
- 17: window
- 18: wheel clamp
- 19: first axis portion
- 20: articulated axis
- 21: first hinge
- 22: second hinge
- 100: motorcycle
- 101: rear wheel axis
- 102: rear wheel
- 103: front wheel
- 104: side
- D1: distance between columns
- D2: width of central axis portion

## Claims

1. A wind tunnel (1) comprising:
- a platform (2) on which a motorcycle (100) can be placed;
- at least one fan (3) arranged in front of and/or behind the platform (2) so as to generate an air flow which flows longitudinally over the platform (2);
- an adjustable support (4) configured to be connected by means of an articulated axis (20) to a portion of the motorcycle (100), preferably to the rear wheel axis (101) thereof, wherein the adjustable support (4) comprises:
- the articulated axis (20), which comprises at least two axis portions (7, 8, 9) hinged to each other;
- a left actuated column (5) and a right actuated column (6) connected to opposite ends of the articulated axis (20), respectively.

2. A wind tunnel (1) according to claim 1, wherein the articulated axis (20) comprises a left axis portion (7), a right axis portion (8), and a central axis portion (9), and wherein the central axis portion (9) is hinged by means of a left hinge (10) to the left axis portion (7) and by means of a right hinge (11) to the right axis portion (8).

3. A wind tunnel (1) according to claim 2, wherein the left and right hinges (10, 11) have hinging axes (12, 13) substantially parallel to the platform (2).

4. A wind tunnel (1) according to claim 2 or 3, wherein the left axis portion (7) is slidingly coupled to the left actuated column (5) or the right axis portion (8) is slidingly coupled to the right actuated column (6).

5. A wind tunnel (1) according to any one of claims 2 to 4, wherein the left actuated column (5) comprises a clamping device (14) configured to clamp the left axis portion (7) and/or the right actuated column (6) comprises a clamping device (14) configured to clamp the right axis portion (8).

6. A wind tunnel (1) according to any one of the preceding claims, wherein the central axis portion (9) is configured to pass in the rear wheel axis (101) of the motorcycle (100).

7. A wind tunnel (1) according to any one of the preceding claims, wherein the central axis portion (9) comprises connecting means (18) to connect the rear wheel axis (101) of the motorcycle (100) to the central axis portion (9).

8. A wind tunnel (1) according to any one of the preceding claims, wherein the left and right actuated columns (5, 6) are arranged vertically with respect to the platform (2).

9. A wind tunnel (1) according to any one of the preceding claims, wherein the left and right actuated columns (5, 6) are configured to move up and down, in an independent manner, with respect to the platform (2).

10. A wind tunnel (1) according to any one of the preceding claims, wherein the width of the central axis portion (9) is greater than or equal to half the distance between the left and right actuated columns (5, 6).

11. A wind tunnel (1) according to any one of the preceding claims, further comprising at least one roller (16) arranged below the platform (2) and in contact with the wheel(s) (102, 103) of the motorcycle (100) by means of through opening(s) (17) provided on the platform (2) at said wheel(s) (102, 103).

## Patentansprüche

1. Windkanal (1), umfassend:
- eine Plattform (2), auf der ein Motorrad (100) positioniert werden kann;
- mindestens ein Gebläse (3), das vor und/oder hinter der Plattform (2) angeordnet ist, um einen Luftstrom zu erzeugen, der längs über die Plattform (2) strömt;
- eine verstellbare Halterung (4), die dazu konfiguriert ist, mittels einer Gelenkachse (20) mit einem Abschnitt des Motorrads (100), vorzugsweise mit dessen Hinterradachse (101), verbunden zu werden, wobei die verstellbare Halterung (4) umfasst:
- die Gelenkachse (20), die mindestens zwei Achsabschnitte (7, 8, 9) umfasst, die scharniert miteinander verbunden sind;
- eine linke angetriebene Säule (5) und eine rechte angetriebene Säule (6), die jeweils mit den gegenüberliegenden Enden der Gelenkachse (20) verbunden sind.

2. Windkanal (1) nach Anspruch 1, wobei die Gelenkachse (20) einen linken Achsabschnitt (7), einen rechten Achsabschnitt (8) und einen mittleren Achsabschnitt (9) umfasst, und wobei der mittlere Achsabschnitt (9) mittels eines linken Scharniers (10) mit dem linken Achsabschnitt (7) und mittels eines rechten Scharniers (11) mit dem rechten Achsabschnitt (8) scharniert wird.

3. Windkanal (1) nach Anspruch 2, wobei die linken und rechten Scharniere (10, 11) Scharnierachsen (12, 13) aufweisen, die sich im Wesentlichen parallel zu der Plattform (2) erstrecken.

4. Windkanal (1) nach Anspruch 2 oder 3, wobei der linke Achsabschnitt (7) gleitend mit der linken angetriebenen Säule (5) gekoppelt ist oder der rechte Achsabschnitt (8) gleitend mit der rechten angetriebenen Säule (6) gekoppelt ist.

5. Windkanal (1) nach einem der Ansprüche 2 bis 4, wobei die linke angetriebene Säule (5) eine Klemmvorrichtung (14) umfasst, die dazu konfiguriert ist, den linken Achsabschnitt (7) zu klemmen, und/oder wobei die rechte angetriebene Säule (6) eine Klemmvorrichtung (14) umfasst, die dazu konfiguriert ist, den rechten Achsabschnitt (8) zu klemmen.

6. Windkanal (1) nach einem der vorhergehenden Ansprüche, wobei der mittlere Achsabschnitt (9) dazu konfiguriert ist, durch die Hinterradachse (101) des Motorrads (100) durchzugehen.

7. Windkanal (1) nach einem der vorhergehenden Ansprüche, wobei der mittlere Achsabschnitt (9) Verbindungsmittel (18) umfasst, um die Hinterradachse (101) des Motorrads (100) mit dem mittleren Achsabschnitt (9) zu verbinden.

8. Windkanal (1) nach einem der vorhergehenden Ansprüche, wobei die linke und rechte angetriebenen Säulen (5, 6) vertikal in Bezug auf die Plattform (2) angeordnet sind.

9. Windkanal (1) nach einem der vorhergehenden Ansprüche, wobei die linke und rechte angetriebenen Säulen (5, 6) dazu konfiguriert sind, sich unabhängig voneinander auf und ab in Bezug auf die Plattform (2) zu bewegen.

10. Windkanal (1) nach einem der vorhergehenden Ansprüche, wobei die Breite des mittleren Achsabschnitts (9) größer oder gleich der Hälfte des Abstands zwischen den linken und rechten angetriebenen Säulen (5, 6) ist.

11. Windkanal (1) nach einem der vorhergehenden Ansprüche, ferner umfassend mindestens eine Walze (16), die unterhalb der Plattform (2) angeordnet ist und über mindestens eine Durchgangsöffnung (17), die an der Plattform (2) auf Höhe des bzw. der Räder (102, 103) vorgesehen ist, mit dem bzw. den Rädern (102, 103) des Motorrads (100) in Kontakt steht.

## Revendications

1. Tunnel aérodynamique (1) comprenant :
- une plateforme (2) sur laquelle une motocyclette (100) peut être placée ;
- au moins un ventilateur (3) disposé devant et/ou derrière la plateforme (2) de manière à générer un flux d'air qui s'écoule longitudinalement sur la plateforme (2) ;
- un support réglable (4) configuré pour être relié au moyen d'un axe articulé (20) à une partie de la motocyclette (100), de préférence à l'axe de la roue arrière (101) de celle-ci, ledit support réglable (4) comprenant :
- l'axe articulé (20), qui comprend au moins deux portions d'axe (7, 8, 9) articulées entre elles ;
- une colonne gauche motorisée (5) et une colonne droite motorisée (6) reliées respectivement aux extrémités opposées de l'axe articulé (20).

2. Tunnel aérodynamique (1) selon la revendication 1, dans laquelle l'axe articulé (20) comprend une portion d'axe gauche (7), une portion d'axe droite (8) et une portion d'axe centrale (9), et dans laquelle la portion d'axe centrale (9) est articulée au moyen d'une articulation gauche (10) à la portion d'axe gauche (7) et au moyen d'une articulation droite (11) à la portion d'axe droite (8).

3. Tunnel aérodynamique (1) selon la revendication 2, dans laquelle les articulations gauche et droite (10, 11) possèdent des axes d'articulation (12, 13) sensiblement parallèles à la plateforme (2).

4. Tunnel aérodynamique (1) selon la revendication 2 ou 3, dans laquelle la portion d'axe gauche (7) est couplée de manière coulissante à la colonne gauche motorisée (5) ou la portion d'axe droite (8) est couplée de manière coulissante à la colonne droite motorisée (6).

5. Tunnel aérodynamique (1) selon l'une quelconque des revendications 2 à 4, dans laquelle la colonne gauche motorisée (5) comprend un dispositif de serrage (14) configuré pour serrer la portion d'axe gauche (7) et/ou la colonne droite motorisée (6) comprend un dispositif de serrage (14) configuré pour serrer la portion d'axe droite (8).

6. Tunnel aérodynamique (1) selon l'une quelconque des revendications précédentes, dans laquelle la portion d'axe centrale (9) est configurée pour passer dans l'axe de la roue arrière (101) de la motocyclette (100).

7. Tunnel aérodynamique (1) selon l'une quelconque des revendications précédentes, dans laquelle la portion d'axe centrale (9) comprend des moyens de connexion (18) pour connecter l'axe de la roue arrière (101) de la motocyclette (100) à la portion d'axe centrale (9).

8. Tunnel aérodynamique (1) selon l'une quelconque des revendications précédentes, dans laquelle les colonnes gauche et droite motorisées (5, 6) sont disposées verticalement par rapport à la plateforme (2).

9. Tunnel aérodynamique (1) selon l'une quelconque des revendications précédentes, dans laquelle les colonnes gauche et droite motorisées (5, 6) sont configurées pour se déplacer de haut en bas, de manière indépendante, par rapport à la plateforme (2).

10. Tunnel aérodynamique (1) selon l'une quelconque des revendications précédentes, dans laquelle la largeur de la portion d'axe centrale (9) est supérieure ou égale à la moitié de la distance entre les colonnes gauche et droite motorisées (5, 6).

11. Tunnel aérodynamique (1) selon l'une quelconque des revendications précédentes, comprenant en outre au moins un rouleau (16) disposé sous la plateforme (2) et en contact avec la ou les roues (102, 103) de la motocyclette (100) au moyen d'une ou plusieurs ouvertures traversantes (17) prévues sur la plateforme (2) au niveau desdites roues (102, 103).
